# EUROPÄISCHE PATENTSCHRIFT

(11) **EP 0 400 281 B1**
(45) Veröffentlichungstag und Bekanntmachung des Hinweises auf die Patenterteilung: **08.09.1993**
(21) Anmeldenummer: 90104383.6
(22) Anmeldetag: 08.03.1990
(51) Int. Cl.: B29C 47/02

(54) **Einrichtung zum kontinuierlichen Ummanteln von zylindrischen Werkstücken mit einem elastischen Material**
Device for continuously jacketing cylindrical workpieces with elastic material
Dispositif pour enrober de façon continuelle des pièces à usiner cylindriques avec un matériau élastique

(30) Priorität: 29.05.1989 DE 3917372
(43) Veröffentlichungstag der Anmeldung: 05.12.1990
(73) Patentinhaber: HERMANN BERSTORFF Maschinenbau GmbH, D-30627 Hannover (Kleefeld) (DE)
(72) Erfinder: Müller-Erwig, Horst, Dipl.-Ing., D-3057 Neustadt 2 (DE)

(56) Entgegenhaltungen:
- EP-A- 0 231 976
- GB-A- 921 414
- GB-A- 1 082 538

## Beschreibung

Die Erfindung betrifft eine Einrichtung der Gattung wie beschrieben im Oberbegriff des ersten Patentanspruchs.

Eine derartige Einrichtung ist bekannt aus der EP-A-0 231 976. Mittels dieser Einrichtung werden beispielsweise metallische polygrafische Walzen u.dgl. mit einer Kautschukschicht ummantelt.

Der Vorteil dieser Einrichtungen zum Ummanteln zylindrischer Werkstücke besteht darin, daß eine kontinuierliche Arbeitsweise durchführbar ist und daß derartig hergestellte Walzmäntel weder in Längsrichtung noch auf ihrem Umfang Fließmarkierungen durch ein Führungsrohr haltende Dornhaltestege aufweisen.

Wenn eine Walzenbeschichtung durch eine wendelförmige Umwicklung der Walzen erfolgt, können an den Überlappungs- bzw. Verbindungsstellen störende Materialstrukturen entstehen. Nach erfolgter Vulkanisation des Kautschukmantels, muß die Oberfläche daher plangeschliffen werden. Für viele Einsatzzwecke ist eine so hergestellte ummantelte Walze ausreichend. Wenn jedoch beispielsweise metallische polygrafische Walzen mit einer Gummibeschichtung ummantelt werden, sind allergrößte Genauigkeiten an die Walzenoberfläche zu stellen. Die Oberfläche muß sehr glatt sein und die Gummischicht darf auch nicht die kleinsten Lufteinschlüsse aufweisen, weil die Bläschen durch den Nachschleifvorgang aufgeschliffen und somit winzige Löcher in der Oberfläche hinterlassen würden.

Auch bei der Belegung mittels eines Kopfes, wie gezeigt in der EP-A-0 231 976, ist die Beschickung der Materialverteilerhülse mit Material ungleichmäßig, so daß erstens die Gefahr von Lufteinschlüssen und zweitens ein in seiner Dicke unregelmäßiger Belag erzeugt wird. Ein Nachschleifvorgang ist in erster Linie erforderlich, um Dickenunterschiede des Belegungsmantels auszugleichen.

Es ist die Aufgabe der Erfindung, eine Einrichtung der Gattung, wie beschrieben in der EP-A-0 231 976, zu verbessern. Insbesondere soll der Mantel aus dem elastischen Material eine sehr gleichmäßige Dicke aufweisen, um möglichst wenig des sehr teuren Beschichtungskautschuks bzw. einer Kunststoffmischung abschleifen zu müssen.

Die Aufgabe wird durch die Merkmale des ersten Patentanspruchs gelöst.

Die Ausbildung der ummantelungskopfseitigen Austrittsquerschnittsfläche des Fließkanals zwischen dem Extruder und dem Ummantelungskopf mit einer Dimension, z. B. bei einer schlitzförmigen Ausbildung der Querschnittsfläche, mit einer Schlitzlänge entsprechend der axialen Steigungslänge eines Fördersteges, während eines Umlaufs auf dem Rücken des Materialverteilers, gewährleistet, daß der Schneckengang bei nur einer Umdrehung des Materialverteilers (eine axiale Steigungslänge) während der gesamten Umdrehung kontinuierlich einer mit Kautschukmischung befüllt wird.

Sowohl der Anfang der dazwischenliegenden Bereiche als auch das Gangende einer Steigung wird kontinuierlich mit der Kautschukmischung gefüllt, wenn es unter der Austrittsquerschnittsfläche hindurchläuft, so daß Lufteinschlüsse vermieden werden.

Durch die sehr gleichmäßige Befüllung der Schneckengänge wird auch der Ummantelungsvorgang sehr vergleichmäßigt, was sich insbesondere durch eine sehr gleichmäßige Dicke des Belages bemerkbar macht.

Es brauchen daher nur noch sehr dünne Schichten abgeschliffen zu werden, so daß der Schleifvorgang sehr schnell durchgeführt ist und nur sehr wenig der sehr teuren Kautschukmischung verloren geht. Die Dickentoleranzen des Mantels werden bis zu 80 % verringert.

In vorteilhafter Weise wird die Fläche des Eingangsquerschnittes des den Extruder mit dem Ummantelungskopf verbindenden Fließkanals etwa entsprechend der Fläche des Ausgangsquerschnittes gewählt. Durch diese Maßnahme wird erreicht, daß keine laminaren Strömungen unterschiedlicher Geschwindigkeit aufgrund eines Druckgefälles in dem Fließkanal entstehen.

Ausführungsbeispiele der Erfindung werden in den Zeichnungen gezeigt und nachfolgend erläutert.

Es zeigen:
- Fig. 1: eine perspektivische Ansicht einer Einrichtung zum Ummanteln von zylindrischen Körpern gemäß dem Stand der Technik.
- Fig. 2: einen Längsschnitt durch einen Ummantelungskopf gemäß der Erfindung.
- Fig. 3: einen Längsschnitt einer Draufsicht gemäß der Linie III-III in Fig. 2.
- Fig. 4: eine Abwicklung der Oberfläche einer Materialverteilungshülse, gemäß dem Stand der Technik.
- Fig. 5: eine Abwicklung mit 5 Fördergängen.

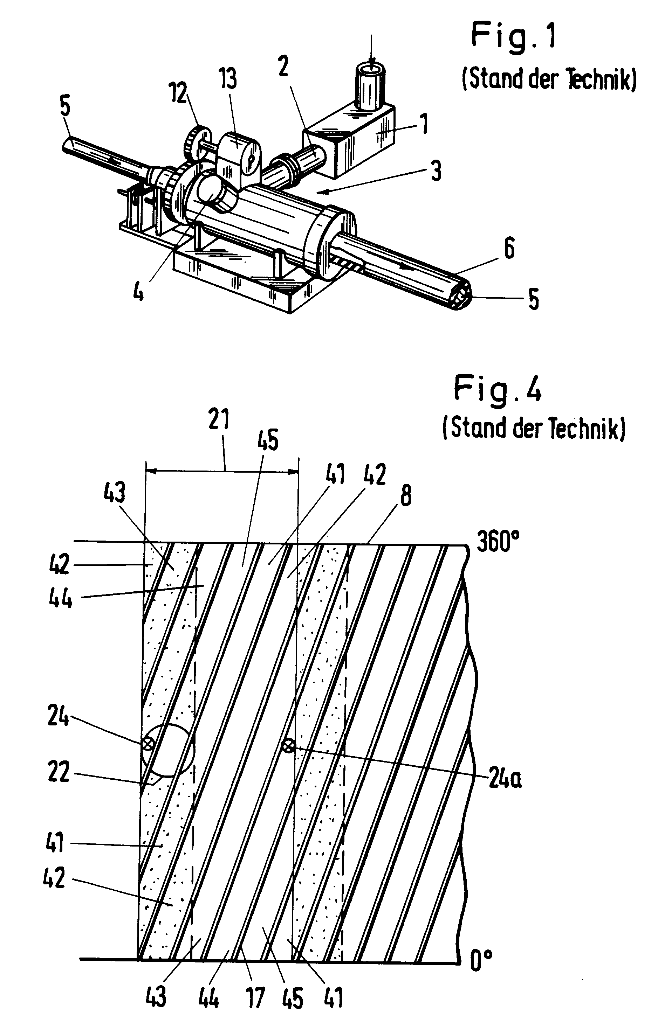

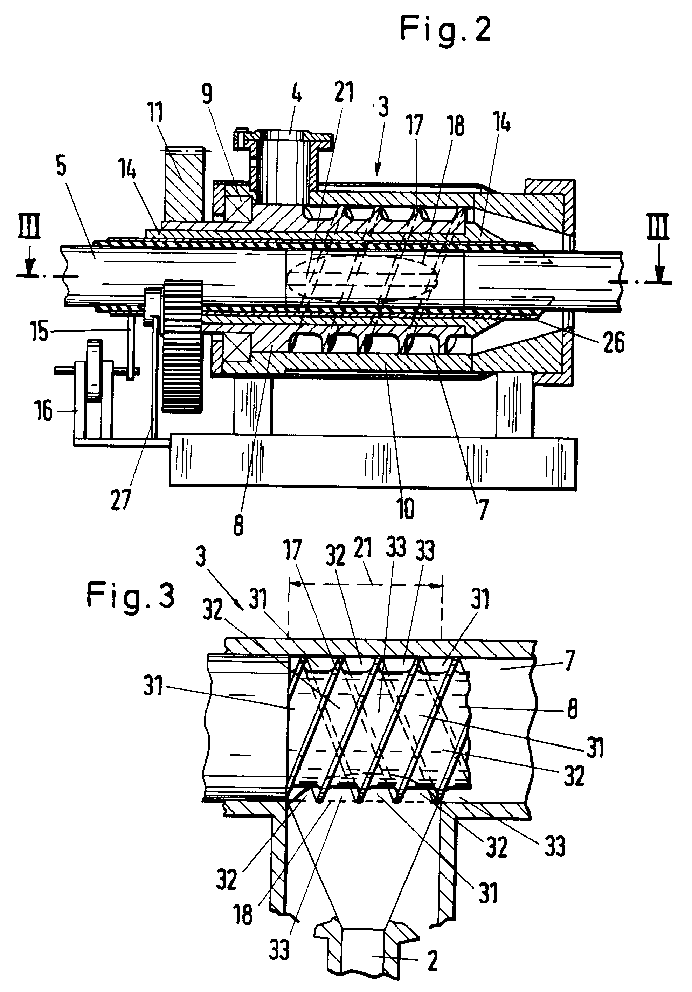

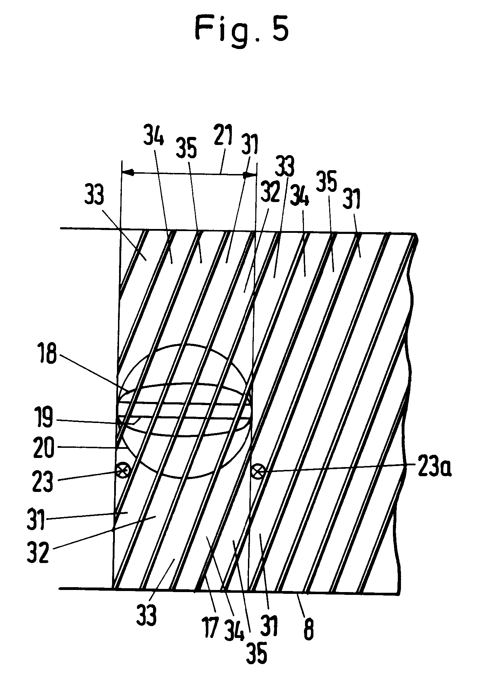

Bei den erfindungsgemäßen Fig. 2, 3 und 5 werden gleiche Bezugszeichen für gleiche Teile benutzt, wenn diese auch in den Fig. 1 und 4 gemäß dem Stand der Technik vorkommen.

Die in Fig. 1 gezeigte Ummantelungseinrichtung setzt sich zusammen aus dem Extruder 1, der durch den Fließkanal 2 mit dem Ummantelungskopf 3 verbunden ist. Der Ummantelungskopf 3 weist eine Entgasungsöffnung 4 auf. Durch den Kopf 3 wird ein zylindrischer Körper 5 geführt und dabei mit einer Kautschukschicht 6 ummantelt.

Die im Extruder aufbereitete Kautschukmischung gelangt durch den Fließkanal 2 (Fig. 3) in den Verteilerraum 7, in dem ein hülsenförmig ausgebildter Materialverteiler 8 angeordnet ist.

Der Materialverteiler 8 ist im Lager 9 des Gehäuses 10 angeordnet und weist auf seinem getriebeseitigen Ende ein Antriebszahnrad 11 auf. In das Antriebszahnrad 11 greift ein Ritzel 12 ein, welches von einem Motor 13 angetrieben wird (Fig. 1).

In der Materialverteilerhülse 8 ist koaxial eine stationäre Zentralrohr 14 angeordnet, das nicht mitrotiert und das durch ein rahmenartiges Gestänge 27 mit der Bodenplatte verbunden ist. In dem Zentralrohr 14 ist wiederum eine axial zwar bewegliche, aber beim Belegungsvorgang stationär gehaltene Führungshülse 26 angeordnet, für die Führung des zu belegenden Werkstückes. Die Führungshülse 26 wird durch das Gestände 15 mit einer Haltekonsole 16 verbunden.

Auf dem Rücken des Materialverteilers 8 sind wendelförmige Förderstege 17 angeordnet.

Bei der in Fig. 2, 3 und 5 gezeigten Ausführungsform ist die Austrittsquerschnittsfläche 18 des Verbindungskanal 2 oval gestaltet und weist eine Dimension auf, nämlich ihren größten Durchmesser, mit einer Abmessung, die der axialen Steigungslänge (21) der wendelförmigen Förderstege nach 360° um den Materialverteiler 8 herum entspricht.

In Fig. 5 wird eine Abwicklung des vorderen Teiles des Materialverteilers 8 gezeigt. Es wird ein fünfgängiger Materialverteiler 8 mit den Gängen 31 bis 35 gezeigt, bei dem ein schlitzförmiger Austrittsquerschnitt 19 oder alternativ ein ovaler Austrittsquerschnitt 18 bzw. ein runder Austrittsquerschnitt 20 des Fleißkanals 2 gezeigt wird.

Alle Austrittsquerschnitte 18, 19 und 20 besitzen eine Dimension, die der axialen Steigungslänge 21 eines wendelförmigen Fördersteges 17 nach einem 360° Umlauf entsprechen.

Durch die Ausbildung der Austrittsquerschnittsfläche 18 mit einer Dimension 21, wird erreicht, daß alle Schneckengänge gleichmäßig mit plastifizierten Kautschuk beschickt werden, während einer 360° Umdrehung des Verteilers 8.

Die Gänge 31 bis 35 werden daher ständig gleichmäßig gefüllt, so daß in den Fördergängen 31 bis 35 durch ein Abrollen des Materials an der Innenwandung des Gehäuses 10, eine völlig gleichmäßige Fördergeschwindigkeit erzeugt wird. Für ein sehr homogenes und blasenfreies Auspressen der Kautschukmischung auf einen metallischen Walzenkern 5 ist dies von großer Bedeutung.

Der gleichmäßige Befüllvorgang wird bei jeder beliebigen Gangzahl erreicht, wenn der Querschnitt der Austrittsöffnung 18, 19 oder 20 eine Dimension aufweist, entsprechend einer Steigungslänge 21 der Schneckengänge.

Wichtig ist, daß während einer Umdrehung des Verteilers 8 um 360° alle Gänge mit ihrer Steigungslänge einmal unter dem Austrittsquerschnitt hindurchgelaufen und somit befüllt werden.

Während einer Umdrehung des Verteilers 8 wird beispielsweise Material vom Punkt 23 (in Fig. 5) im Gang 35 zum Punkt 23a gefördert, was einer axialen Steigungslänge 21 entspricht, so daß nach einer 360° Umdrehung alle Fördergänge gefüllt sind und danach ständig kontinuierlich befüllt werden.

Wenn gemäß dem Stand der Technik, wie gezeigt in Fig. 4, jedoch die Länge des Austrittsquerschnittes des Fließkanals weniger als eine axiale Steigungslänge ist, werden die Gänge 41, 42 und 43 zwischen den Stegen bei einer 360° Umdrehung (Abwicklungslänge) nur zu einem kleinen Teil gefüllt, was durch die punktierte Fläche dargestellt ist. Die Gänge 44 und 45 werden gar nicht befüllt.

Eine Teilfüllung der Gänge verursacht eine ungleichmäßige Beschichtungsdicke und begünstigt die Lufteinschlußgefahr in die Kautschukmischung.

Ein Materialteilchen, welches sich in Fig. 4 bei dem Punkt 24 befindet, erreicht nach einer Umdrehung um 360° den Punkt 24a, wobei dazwischen in den Gängen kein Material vorhanden ist, so daß ein pumpartiger Fördervorgang entsteht.

### Bezugszeichenliste:

- 1: = Extruder
- 2: = Fließkanal
- 3: = Ummantelungskopf
- 4: = Entgasungsöffnung
- 5: = zylinderischer Körper
- 6: = Kautschukschicht
- 7: = Verteilerraum
- 8: = Materialverteiler
- 9: = Lager
- 10: = Gehäuse
- 11: = Antriebszahnrad
- 12: = Ritzel
- 13: = Motor
- 14: = Zentralrohr
- 15: = Gestänge
- 16: = Haltekonsole
- 17: = Förderstege
- 18: = ovale Austrittsquerschnittsfläche
- 19: = schlitzförmige Austrittsquerschnittsfläche
- 20: = kreisförmige Austrittsquerschnittsfläche
- 21: = Steigungslänge
- 22: = Einfüllöffnung
- 23: = Punkt
- 24: = Punkt
- 25: = Fließkanalquerschnitt (extruderseitig)
- 26: = Führungshülse
- 27: = Halteeinrichtung
- 31: = Gang
- 32: = Gang
- 33: = Gang
- 34: = Gang
- 35: = Gang
- 41: = Gang
- 42: = Gang
- 43: = Gang
- 44: = Gang
- 45: = Gang

## Patentansprüche

1. Einrichtung zum kontinuierlichen Ummanteln von zylindrischen Werkstücken oder anders geformten Profilkörpern mit einer Mischung aus Kautschuk oder thermoplastischem Kunststoff, bestehend aus einem Extruder (1) zum Plastifizieren der Mischung und einem Ummantelungskopf (3) sowie einem beide Maschinen miteinander verbindenden Fließkanal (2), wobei der Ummantelungskopf (3) durch einen Hohlzylinder gebildet wird, mit darin rotierender Materialverteilerhülse (8) auf dessen Rükken wendelförmige Förderstege (17) angeordnet sind und mit einem koaxial in der Materialverteilerhülse (8) angeordneten stationären Zentralrohr (14), das getriebeseitig gehalten wird und einer koaxial in dem Zentralrohr (14) angeordneten und axial beweglichen, nicht rotierenden Führungshülse (26) für das zu ummantelnde Werkstück (5), die ebenfalls getriebeseitig gehalten wird,
**dadurch gekennzeichnet,**
daß der größte Durchmesser des ummantelungskopfseitigen Austrittsquerschnittsfläche (18, 19, 20) des Fließkanal (2) der axialen Steigungslänge (21) der wendelförmigen Förderstege (17) auf dem Rücken des Materialverteilers (8) etwa entspricht.

2. Einrichtung nach Anspruch 1
**dadurch gekennzeichnet**
daß die Austrittsquerschnittsfläche des Fließkanals (2) schlitzförmig (19), oval (18) oder rund (20) ausgebildet ist.

3. Einrichtung nach Anspruch
**dadurch gekennzeichnet**
daß die wendelförmigen Förderstege (17) auf dem Materialverteiler (8) ein- oder mehrgängig ausgebildet sind.

4. Einrichtungen nach Anspruch 1 und 2
**dadurch gekennzeichnet**
daß der Fließkanal (4) in Richtung des Ummantelungskopfes (3) zu einem schlitzförmigen (19), ovalen (18) oder runden Austrittsquerschnitt (20) umgeformt wird, und daß die Größe der Fläche des ummantelungskopfseitigen Austrittsquerschnittes (18, 19, 20) der Fläche des extruderseitigen Eintrittsquerschnittes (25) des Fließkanales (2) etwa entspricht.

## Claims

1. Apparatus for the continuous coating of cylindrical work pieces or profile bodies of other shapes with a rubber or thermoplastics compound, composed of an extruder (1) for plasticizing the compound and a coating head (3) as well as a flow channel (2) that connects the two machines, the coating head (3) consisting of a hollow barrel with a rotating sleeve-shaped material distributor (8) inside, on the back of which helical conveying flights (17) are arranged, and with a stationary central pipe (14) that is located coaxially in the sleeve-shaped material distributor (8) and held on the gear unit side, the central pipe (14) accomodating a coaxially arranged and axially moveable non-rotating guiding sleeve (26) for the work piece to be coated, which is also held on the gear unit side,
**characterized in that**
the largest diameter of the discharge cross section (18, 19, 20) of the flow channel (2) on the coating head side approximately corresponds to the axial pitch length (21) of the helical conveying flights (17) on the back of the material distributor (8).

2. Apparatus as per claim 1,
**characterized in that**
the discharge cross section of the flow channel (2) is of slot-type (19), oval (18) or round (20) shape.

3. Apparatus as per claim
**characterized in that**
the helical conveying flights (17) on the material distributor (8) are of one-flighted or multiple-flighted design.

4. Apparatus as per claims 1 and 2
**characterized in that**
the discharge cross section of the flow channel (4) is converted into a slot-type (19), oval (18) or round (20) design in the direction of the coating head (3), and that the size of the discharge cross section (18, 19, 20) on the coating head side approximately corresponds to the inlet cross section (25) of the flow channel (2) on the extruder side.

## Revendications

1. Dispositif pour l'enrobage en continu de pièces cylindriques ou de corps profilés présentant une autre forme, avec un mélange en caoutchouc ou en matière thermoplastique, se composant d'une extrudeuse (1) pour la plastification du mélange et d'une tête d'enrobage (3) de même qu'un canal d'écoulement (2) liant les deux machines entre elles, la tête d'enrobage (3) étant formée par un cylindre creux dans lequel se trouve une douille rotative distributrice de matière (8) et des sommets de filet de transport hélicoïdaux (17) disposés sur son dos et avec un tuyau central stationnaire (14) disposé coaxialement dans la douille distributrice de matière (8) et étant connecté côté réducteur, et pour la pièce à enrober (5) d'une douille de guidage (26) mobile axialement, non-rotative, étant disposée coaxialement dans le tuyau central (14) et connectée également côté réducteur,
**caractérisé**
en ce que le diamètre le plus grand de la section transversale de sortie côté tête d'enrobage (18, 19, 20) du canal d'écoulement (2) correspond approximativement à la longueur de pas axiale (21) des sommets de filet de transport hélicoïdaux (17) sur le dos du distributeur de matière (8).

2. Dispositif selon revendication 1
**caractérisé**
en ce que la section transversale de sortie du canal d'écoulement (2) est à fente (19), ovale (18) ou ronde (20).

3. Dispositif selon revendication
**caractérisé**
en ce que les sommets de filet de transport hélicoïdaux (17) sur le distributeur de matière (8) sont réalisés à un ou plusieurs filets.

4. Dispositifs selon revendications 1 et 2
**caractérisé**
en ce que le canal d'écoulement (4) en direction de la tête d'enrobage (3) est transformé en une section transversale de sortie à fente (19), ovale (18) ou ronde (20),
et que la dimension de la section transversale de sortie côté tête d'enrobage (18, 19, 20) correspond approximativement à la section transversale d'entrée côté extrudeuse (25) du canal d'écoulement (2).
